# EUROPÄISCHE PATENTANMELDUNG

(11) **EP 3 616 955 A1**
(43) Veröffentlichungstag der Anmeldung: **04.03.2020**
(21) Anmeldenummer: 19193056.9
(22) Anmeldetag: 22.08.2019
(51) Int. Cl.: B60K 1/00, B62D 65/02, B60S 5/00, B25H 5/00, B60L 3/00

(54) **VERFAHREN ZUM EIN- UND/ODER AUSBAU EINER ELEKTRISCHEN MASCHINE IN/AUS EINEM KRAFTFAHRZEUG SOWIE ZUGEHÖRIGE HILFSVORRICHTUNG UND KRAFTFAHRZEUG**

(30) Priorität: 30.08.2018 DE 102018121187
(71) Anmelder: MAN Truck & Bus SE, 80995 München (DE)
(72) Erfinder: Eberle, Andreas, 83358 Seebruck (DE)
(74) Vertreter: v. Bezold & Partner Patentanwälte - PartG mbB

(57) **Zusammenfassung**

Die Erfindung betrifft ein Verfahren zum Ein- und/oder Ausbau einer elektrischen Maschine in/aus einem Kraftfahrzeug, vorzugsweise in/aus einem Hybrid-Kraftfahrzeug. Das Verfahren umfasst hierbei das Bereitstellen (101) einer Hilfsvorrichtung zum Ein- und/oder Ausbau einer elektrischen Maschine in/aus dem Kraftfahrzeug. Die Hilfsvorrichtung umfasst einen ersten Befestigungsbereich, der mittels mindestens einer ersten Befestigungsstelle lösbar an einer Tragstruktur des Kraftfahrzeugs befestigt ist, einen zweiten Befestigungsbereich, der mittels mindestens einer zweiten Befestigungsstelle lösbar an der elektrischen Maschine und/oder lösbar an einem mit der elektrischen Maschine verbundenen Motorträger befestigt ist, sowie eine Schwenkeinrichtung, die den ersten Befestigungsbereich um eine Schwenkachse schwenkbar mit dem zweiten Befestigungsbereich verbindet, umfasst. Weiterhin erfolgt im Zuge des Verfahrens auch ein Verschwenken (102) der elektrischen Maschine zwischen einer ersten Schwenkposition und einer zweiten Schwenkposition mittels der Hilfsvorrichtung sowie ein Ein- und/oder Ausbau (103) der elektrischen Maschine in/aus dem Kraftfahrzeug. Ferner betrifft die Erfindung auch eine Hilfsvorrichtung zum Ein- und/oder Ausbau einer elektrischen Maschine in/aus einem Kraftfahrzeug sowie ein Kraftfahrzeug mit einer entsprechenden Hilfsvorrichtung.

## Beschreibung

Die Erfindung betrifft ein Verfahren zum Ein- und/oder Ausbau einer elektrischen Maschine in/aus einem Kraftfahrzeug. Ferner betrifft die Erfindung eine Hilfsvorrichtung zum Ein- und/oder Ausbau einer elektrischen Maschine in/aus einem Kraftfahrzeug sowie ein Kraftfahrzeug mit einer entsprechenden Hilfsvorrichtung.

Im Stand der Technik ist es bekannt, ein oder mehrere elektrische Maschinen im Antriebsstrang von Kraftfahrzeugen, insbesondere im Antriebsstrang von Hybridfahrzeugen, einzusetzen. Gerade im Nutzfahrzeugbereich besitzen derartige elektrische Maschinen dabei meist ein hohes Gewicht sowie eine ausladende Größe, weshalb eine Montage bzw. Demontage von Hand ohne entsprechende Hilfsmittel (Halte- und/oder Kranvorrichtungen) nur in seltenen Ausnahmefällen möglich ist. Ferner wird die Montage bzw. Demontage der elektrischen Maschinen ins bzw. aus dem Kraftfahrzeug oftmals auch dadurch erschwert, dass aus Gründen der Fahrzeugstabilität die elektrische Maschine meist fahrzeugmittig positioniert wird, was die Zugänglichkeit von Hilfsmitteln zur Montage bzw. Demontage stark einschränkt.

Entsprechend ist es daher Aufgabe der Erfindung eine einfache und kostengünstige Möglichkeit zum Ein- bzw. Ausbau einer elektrischen Maschine in ein bzw. aus einem Kraftfahrzeug bereitzustellen. Insbesondere ist es eine Aufgabe der Erfindung eine Möglichkeit zum Ein- bzw. Ausbau einer elektrischen Maschine bereitzustellen, die möglichst ohne aufwändige konstruktive Umbauten der Fahrzeugkarosserie bzw. der Tragstruktur des Kraftfahrzeugs auskommt.

Diese Aufgaben werden erfindungsgemäß durch ein Verfahren, eine Vorrichtung sowie ein Kraftfahrzeug mit den Merkmalen der unabhängigen Ansprüche gelöst. Vorteilhafte Ausführungsformen und Anwendungen der Erfindung sind Gegenstand der unabhängigen Ansprüche und werden in derfolgenden Beschreibung unterteilweiser Bezugnahme auf die Figuren näher erläutert.

Der Grundgedanke der Erfindung ist hierbei die elektrische Maschine zwischen ihrer vorgesehenen meist fahrzeugmittigen Einbaulage und einer vorzugsweise fahrzeugaußenliegenden Wartungsposition zu verschwenken und dadurch die Zugänglichkeit sowie Kranbarkeit, z. B. mittels eines mobilen Werkstattkrans und/oder Gabelstaplers, zu erhöhen.

Hierzu umfasst das erfindungsgemäße Verfahren zum Ein- und/oder Ausbau einer elektrischen Maschine in/aus einem Kraftfahrzeug, vorzugsweise in/aus einem Hybrid-Kraftfahrzeug, die folgenden Schritte:
Bereitstellen einer Hilfsvorrichtung zum Ein- und/oder Ausbau einer elektrischen Maschine in/aus dem Kraftfahrzeug. Die Hilfsvorrichtung weist dabei einen ersten Befestigungsbereich auf, der mittels mindestens einer ersten Befestigungsstelle lösbar an einer Tragstruktur des Kraftfahrzeugs befestigt ist. Als Tragstruktur können in diesem Zusammenhang Fahrzeugbauteile, wie beispielsweise Rahmen, Chassis und/oder Karosserie, verstanden werden, die primär eine tragende Funktion haben, d. h. Lasten aufnehmen können. Ferner umfasst die Hilfsvorrichtung einen zweiten Befestigungsbereich, der mittels mindestens einer zweiten Befestigungsstelle lösbar an der elektrischen Maschine und/oder lösbar an einem mit der elektrischen Maschine verbundenen Motorträger befestigt ist. Ein Motorträger, welcher im Stand der Technik auch als Hilfsrahmen bezeichnet wird, kann dabei zur Befestigung und/oder Lagerung der elektrischen Maschine verwendet werden, falls diese, beispielsweise aufgrund einer Mehrzahl an dieser angeordneten Nebenaggregaten und/oder Kühleinrichtungen, selbst wenig Befestigungsmöglichkeiten bietet. Weiterhin umfasst die Hilfsvorrichtung eine Schwenkeinrichtung, vorzugsweise eine Scharnier- und/oder Gelenkeinrichtung, die den ersten Befestigungsbereich um eine Schwenkachse schwenkbar mit dem zweiten Befestigungsbereich verbindet. Beispielsweise kann die Schwenkeinrichtung dabei in Form eines Flügelscharniers und/oder Bandes ausgebildet sein. Um weiterhin einen möglichst einfachen Ein- bzw. Ausbau zu ermöglichen, kann die Schwenkachse im montierten Zustand der Hilfsvorrichtung im Wesentlichen vertikal, d. h. möglichst in Schwerkraftrichtung orientiert sein.

Neben dem Bereitstellen der oben genannten Hilfsvorrichtung umfasst das Verfahren ferner den Schritt des Verschwenkens der elektrischen Maschine zwischen einer ersten Schwenkposition und einer zweiten Schwenkposition mittels der Hilfsvorrichtung. Vorzugsweise handelt es sich bei der ersten Schwenkposition um eine Position an oder nahe der vorgesehenen Einbauposition der elektrischen Maschine im Kraftfahrzeug und/oder bei der zweiten Schwenkposition um eine möglichst fahrzeugaußenliegende Position, die einen guten Zugang weiterer Hilfsmittel (z. B. Kran, Gabelstapler, Werkzeuge, etc.) ermöglicht.

Ferner umfasst das Verfahren den Schritt des Ein- und/oder Ausbaus der elektrischen Maschine in/aus dem Kraftfahrzeug. Dieser Schritt kann in diesem Zusammenhang auch als Montage bzw. Demontage der elektrischen Maschine in/aus dem Kraftfahrzeug bezeichnet werden. Mit anderen Worten kann die elektrische Maschine in ihrer vorgesehenen Einbauposition fixiert (Einbau) und/oder aus dem Kraftfahrzeug entfernt bzw. entnommen werden (Ausbau). Im Zuge des Ein- bzw. Ausbaus können dabei auch weitere, für den Fachmann unmittelbar ersichtliche Schritte durchgeführt werden, darunter das Lösen und/oder Herstellen form-, kraft- und/oder reibschlüssiger Verbindungen zwischen den verschiedenen - oben genannten - Bauteilen sowie das Lösen und/oder Herstellen einer antriebsmäßigen Verbindung der elektrischen Maschine mit dem Antriebsstrang. Auf vorteilhafte Weise wird durch das eben beschriebene Verfahren eine einfache und kostengünstige Möglichkeit zum Ein- bzw. Ausbau einer elektrischen Maschine in ein bzw. aus einem Kraftfahrzeug bereitgestellt, mit dem die Montage, die Wartung und mögliche Reparaturen an der elektrischen Maschine im Vergleich zu bisherigen Methoden vereinfacht werden.

Nach einem ersten Aspekt der Erfindung kann die Hilfsvorrichtung dabei dauerhaft im Kraftfahrzeug verbaut sein. Hierzu kann die Hilfsvorrichtung beispielsweise als integraler Bestandteil der Tragstruktur ausgebildet sein. Auf vorteilhafte Weise wird dadurch zur jederzeit ein Ein- bzw. Ausbau der elektrischen Maschine ermöglicht. Alternativ kann die Hilfsvorrichtung auch nur zum Ein- und/oder Ausbau der elektrischen Maschine am Kraftfahrzeug montiert werden. Anders ausgedrückt kann die Hilfsvorrichtung somit nur zeitweise am Kraftfahrzeug befestigt sein. Vorzugsweise können hierzu an der Tragstruktur des Kraftfahrzeugs, der elektrischen Maschine und/oder am Motorträger vordefinierte Montagestellen zur Befestigung der Hilfsvorrichtung vorgesehen sein. Diese können beispielsweise in Form von Bohrungen, Halterungsstiften, Laschen und/oder Haken ausgebildet sein, um form- kraft und/oder reibschlüssig mit der mindestens einen ersten und/oder zweiten Befestigungsstelle zusammenzuwirken. Das Anbringen der Hilfsvorrichtung nur bei Bedarf ermöglicht dabei - neben der Einsparung von Bauraum - auf vorteilhafte Weise den Kraftstoff bzw. Energieverbrauch des Kraftfahrzeugs zu senken, da weniger Gewicht während des Betriebs des Kraftfahrzeugs bewegt werden muss. Weiterhin können im Rahmen der Erfindung auch nur Teile der Hilfsvorrichtung dauerhaft im Kraftfahrzeug verbaut sein, während die restlichen Teile nur zum Ein- und/oder Ausbau der elektrischen Maschine am Kraftfahrzeug montiert werden. Beispielsweise können am Fahrzeug ein oder mehrere Scharnierstifte bzw. Drehbolzen (d. h. Teile des ersten Befestigungsbereichs und der Schwenkeinrichtung) fest montiert sein, in die ein Befestigungsträger (d. h. der zweite Befestigungsbereich) eingehängt wird.

Gemäß einem weiteren Aspekt der Erfindung kann die Hilfsvorrichtung ferner auch eine Hebeeinrichtung umfassen, mittels der der zweite Befestigungsbereich relativ zum ersten Befestigungsbereich entlang der Schwenkachse bewegbar, vorzugsweise anhebbar und/oder absenkbar, ist. Mit anderen Worten kann der zweite Befestigungsbereich der Hilfsvorrichtung somit sowohl eine Schwenk- bzw. Rotationsbewegung um die Schwenkachse als auch eine translatorische Bewegung entlang der Schwenkachse ausführen. Vorzugsweise ist die Bewegungsrichtung im montierten Zustand der Hilfsvorrichtung dabei in vertikaler Richtung, d. h. im Wesentlichen in Schwerkraftrichtung, orientiert. Dieser zusätzliche Freiheitsgrad ermöglicht auf vorteilhafte Weise neben einem reinen Verschwenken auch ein Anheben bzw. Absenken der elektrischen Maschine.

Zudem oder alternativ kann mittels der Hebeeinrichtung auch eine formschlüssige Verbindung der elektrischen Maschine mit dem Kraftfahrzeug und/oder eine formschlüssige Verbindung des Motorträgers mit dem Kraftfahrzeug lösbar sein. Beispielsweise können hierzu an der elektrischen Maschine und/oder am Motorträger zu deren Lage- bzw. Bewegungssicherung zapfenförmige Elemente angebracht sein, die in formentsprechende taschenförmige Vertiefungen am Kraftfahrzeug eingreifen. Gemäß diesem Aspekt können die formschlüssigen Verbindungen mittels der Hebeeinrichtung beispielsweise entriegelt bzw. verriegelt werden, um damit ein Verschwenken der elektrischen Maschine zu verhindern bzw. zu ermöglichen. Auf vorteilhafte Weise kann durch diese zeitweise Fixierung die Montage bzw. Demontage der elektrischen Maschine erleichtert werden.

Um auf vorteilhafte Weise eine kostengünstige Schwenkeinrichtung mit möglichst wenigen zusätzlichen Bauteilen bereitzustellen, kann gemäß einem weiteren Aspekt der Erfindung die Schwenkeinrichtung als Scharnier sowie der erste und zweite Befestigungsbereich jeweils als über einen Scharnierbolzen in Verbindung stehende Scharnierflügel ausgebildet sein. Der Scharnierbolzen, der in diesem Zusammenhang auch als Scharnierstift bezeichnet werden kann, kann hierbei auch als integraler Bestandteil des ersten oder zweiten Befestigungsbereichs ausgebildet sein. Ferner kann der erste und/oder zweite Befestigungsbereich zur schwenkbaren Lagerung am Scharnierbolzen auch eine Buchse und/oder Öse umfassen.

Um zudem beispielsweise das Verschrauben der elektrischen Maschine am Kraftfahrzeug zu erleichtern, kann gemäß einem weiteren Aspekt der Erfindung das Kraftfahrzeug Positioniermittel, vorzugsweise Zentriertaschen, zur formschlüssigen Lagefixierung der elektrischen Maschine und/oder des Motorträgers in einer vorbestimmten Montage- und/oder Wartungsposition umfassen. Als vorbestimmte Montageposition kann dabei die vorgesehene allerdings noch nicht, z. B. durch Verschraubungen, fixierte Einbauposition der elektrischen Maschine verstanden werden, während als Wartungsposition eine möglichst fahrzeugaußenliegende und damit für Reparaturen gut zugängliche Position der elektrischen Maschine verstanden werden kann. Vorzugsweise handelt es sich bei der Montageposition um eine Position nahe oder gleich der ersten Schwenkposition. Zudem oder alternativ kann es sich bei der Wartungsposition auch um eine Position nahe oder gleich der zweiten Schwenkposition handeln. Neben den erwähnten Zentriertaschen, beispielsweise in Form nutförmiger Ausnehmungen, können dabei auch sonstige Positionierzapfen, Passstifte und/oder Zentrierausnehmungen als Positioniermittel zur formschlüssigen Lagefixierung verwendet werden. Auf vorteilhafte Weise stellt die Fixierung der elektrischen Maschine sicher, dass eine vorbestimmte Position möglichst exakt erhalten bleibt, wodurch wiederum die Montage, Wartung und Reparatur der elektrischen Maschine vereinfacht werden.

Nach einer Weiterbildung dieses Aspekts kann das Verfahren auch den Schritt des Lösens und/oder Herstellens einer Lagefixierung der elektrischen Maschine und/oder des Motorträgers mittels der Hebeeinrichtung umfassen. Besonders bevorzugt kann dabei das Lösen und/oder Herstellen der Lagefixierung durch ein Bewegen - beispielsweise durch ein Anheben und/oder Absenken - des zweiten Befestigungsbereichs relativ zum ersten Befestigungsbereich entlang der Schwenkachse erfolgen. Anders ausgedrückt kann das Lösen bzw. Herstellen einer Lagefixierung somit durch eine translatorischen Bewegung entlang der Schwenkachse erfolgen. Beispielsweise kann in diesem Zusammenhang eine formschlüssige Verbindung zwischen Kraftfahrzeug und elektrischer Maschine und/oder Motorträger durch Anheben bzw. Absenken der elektrische Maschine und/oder des Motorträgers mittels der Hebeeinrichtung gelöst und/oder hergestellt werden. Auf vorteilhafte Weise kann dadurch ein einfaches und schnelles Herstellen bzw. Lösen einer Lagefixierung erreicht werden, ohne dass hierfür weitere Bauteile nötig sind.

Zudem oder alternativ kann das Verfahren auch den Schritt des Überführens der elektrischen Maschine und/oder des Motorträgers mittels der Hebeeinrichtung zwischen der ersten Schwenkposition und der Montageposition und/oder zwischen der zweiten Schwenkposition und der Wartungsposition umfassen. Beispielsweise kann für den Einbau der elektrischen Maschine diese zunächst mittels der Hilfsvorrichtung von der (fahrzeugäußeren) zweiten Schwenkposition in die erste Schwenkposition geschwenkt und von dort durch Absenken in die Montageposition, in der dann auch das endgültige Anschrauben erfolgt, abgelassen werden. Vorzugsweise erfolgt dabei gleichzeitig auch eine Positionieren bzw. Lagefixieren der elektrischen Maschine. Zur Demontage kann dann - nach dem Lösen der Verschraubungen der elektrischen Maschine am Kraftfahrzeug in der Montageposition - die Lagefixierung durch Anheben der elektrischen Maschine aus der Montageposition in die erste Schwenkposition gelöst werden. Anschließend kann die elektrische Maschine in die zweite (fahrzeugäußere) Schwenkposition geschwenkt und dort wiederum durch Ablassen in die Wartungsposition fixiert werden. Durch die Aufteilung der verschiedenen Aufgaben (Transport bzw. Fixierung) auf zwei unterschiedliche Bewegungsarten der Hilfsvorrichtung (Schwenkbewegung bzw. Bewegung entlang der Schwenkachse) wird auf vorteilhafte Weise eine sichere und zuverlässige Möglichkeit zur Montage bzw. Demontage bereitgestellt, mit der Bedienfehler vermieden werden können.

Gemäß einem weiteren Aspekt der Erfindung kann die elektrische Maschine über eine Gelenkwelle, vorzugsweise eine Kardanwelle, antriebsmäßig mit dem Antriebsstrang des Kraftfahrzeugs verbunden sein. Die Gelenkwelle kann dabei ein erstes, der elektrischen Maschine zugeordnetes, Ende und ein zweites, dem Antriebsstrang zugeordnetes, Ende umfassen. Um auch in diesem Fall eine zuverlässige Montage bzw. Demontage zu gewährleisten, kann der Schritt des Verschwenkens der elektrischen Maschine zwischen der ersten und zweiten Schwenkposition mittels der Hilfsvorrichtung speziell beim Ausbau folgende Schritte umfassen:
Lösen der Gelenkwelle vom Antriebsstrang, vorzugsweise an ihrem zweiten, d. h. dem Antriebsstrang zugeordneten, Ende. Dies kann beispielsweise von einer Werkstattgrube aus erfolgen, über der das Kraftfahrzeug vorzugsweise abgestellt ist. Anschließend kann ein Verschwenken der elektrischen Maschine und der Gelenkwelle in eine Zwischenschwenkposition zwischen der ersten und zweiten Schwenkposition erfolgen. Vorzugsweise ist die Zwischenschwenkposition dabei so gewählt, dass das erste, d. h. das der elektrischen Maschine zugeordnete, Ende der Gelenkwelle gut für Werkzeuge zugänglich ist. Weiter kann ein Lösen der Gelenkwelle von der elektrischen Maschine und ein Verschwenken der elektrischen Maschine in die zweite Schwenkposition erfolgen, wo die elektrische Maschine dann komplett demontiert, d. h. von der Hilfsvorrichtung gelöst, und damit aus dem Kraftfahrzeug ausgebaut werden kann. Neben der bislang beschriebenen Gelenkwelle kann die elektrische Maschine dabei alternativ auch über eine starre Welle oder eine sonstige antriebsmäßige Verbindungen mit dem Antriebsstrang des Kraftfahrzeugs verbunden sein, ohne den Bereich der Erfindung zu verlassen. Auch ist es für den Fachmann ersichtlich, dass die eben für den Ausbau beschriebenen Schritte beim Einbau der elektrischen Maschine in umgekehrter Reihenfolge erfolgen können. D. h., zunächst dass zunächst ein Verschwenken der elektrischen Maschine aus der zweiten Schwenkposition in die die Zwischenschwenkposition erfolgt. Anschließend ein Montieren der Gelenkwelle an der elektrischen Maschine in der Zwischenschwenkposition. Weiter ein Verschwenken der elektrischen Maschine samt einseitig montierter Gelenkwelle von der Zwischenschwenkposition in die erste Schwenkposition und dort Verbinden der Gelenkwelle mit dem Antriebsstrang. Auf vorteilhafte Weise kann durch diesen Aspekt ein zuverlässiger Ein- bzw. Ausbau der elektrischen Maschine gewährleistet werden, auch falls bauartbedingt die elektrische Maschine samt Gelenkwelle nur in einem eingeschränkten Winkelbereich im Kraftfahrzeug verschwenkt werden kann.

Um auf vorteilhafte Weise beim Verschwenkvorgang ein Verhaken der Gelenkwelle an der Tragstruktur des Kraftfahrzeugs zu verhindern, kann gemäß einer Weiterbildung dieses Aspekts während des Schritts des Verschwenkens der elektrischen Maschine und der Gelenkwelle von der ersten Schwenkposition in die Zwischenschwenkposition die Gelenkwelle an der Hilfsvorrichtung lösbar fixiert sein. Hierzu können an der Hilfsvorrichtung, der Motoplatte und/oder der elektrischen Maschine Halte- und/oder Befestigungsstellen, beispielsweise in Form von Haken und/oder Schlaufen, vorgesehen sein, mittels der die einseitig gelöste Gelenkwelle während der Schwenkbewegung fixiert werden kann. Auf vorteilhafte Weise können so insbesondere auch Beschädigungen an Kabeln und Leitungen durch die verschwenkende Gelenkwelle vermieden werden.

Nach einem weiteren Aspekt der Erfindung kann die Tragstruktur des Kraftfahrzeugs ein Rahmen, ein Querträger und/oder ein Spant sein. Zudem oder alternativ kann es sich bei der Tragstruktur auch um andere tragende Bauteile des Kraftfahrzeugs beispielsweise das Chassis und/oder die Karosserie handeln. Auf vorteilhafte Weise wird dadurch ein sicherer Halt der Hilfsvorrichtung sichergestellt. Zudem oder alternativ kann das Kraftfahrzeug auch Arretierungsmittel zur lösbaren kraft-, form- und/oder reibschlüssigen Arretierung der elektrischen Maschine und/oder des Motorträgers umfassen. Beispielsweise kann das Kraftfahrzeug hierzu Halte-, Klemm-, Feder- und/oder Schraubelemente zur Lagefixierung der elektrischen Maschine und/oder des Motorträgers umfassen. Dies ist besonders vorteilhaft, falls die Hilfsvorrichtung über keinen Hebemechanismus und/oder das Kraftfahrzeug über keine Positioniermittel verfügt. Auf vorteilhafte Weise kann so dennoch eine ausreichende, die Montage bzw. Demontage erleichternde Fixierung erreicht werden. Zudem oder alternativ können die erste Schwenkposition und die zweite Schwenkposition einen Winkel von mindestens 45° und/oder nahezu 90° einschließen. Auf vorteilhafte Weise wird dadurch eine große Bewegungsfreiheit der elektrischen Maschine und dadurch eine möglichst gute Erreichbarkeit der elektrischen Maschine sichergestellt. Zudem oder alternativ kann die Schwenkachse im montierten Zustand der Hilfsvorrichtung im Wesentlichen vertikal ausgerichtet sein. Mit anderen Worten kann die Schwenkachse der Schwenkeinrichtung im montierten Zustand der Hilfsvorrichtung im Wesentlichen in Schwerkraftrichtung orientiert sein. Auf vorteilhafte Weise werden dadurch die Belastungen durch das Gewicht der elektrischen Maschine bzw. der Motorplatte von der Schwenkeinrichtung an die Tragstruktur geleitet und damit ein Verschwenken mit möglichst geringem Kraftaufwand ermöglicht.

Gemäß einem weiteren Aspekt der Erfindung kann die elektrische Maschine eine elektrische Maschine zum Antrieb des Kraftfahrzeugs sein. Mit anderen Worten kann die elektrische Maschine aufgrund ihrer Leistungsspezifikation in der Lage sein, das Kraftfahrzeug in Bewegung zu versetzen. Vorzugsweise kann die elektrische Maschine dabei eine Dauerleistung von mindestens 100 kW, 150 kW oder sogar mindestens 200 kW aufweisen. Die Spitzenleistung der elektrischen Maschine kann dagegen vorzugsweise mindestens 250 kW, 300 kW oder sogar 320 kW betragen. Ferner kann die elektrische Maschine sowohl motorisch und/oder generatorisch betreibbar sein. Gerade im Fall derart großer und entsprechend schwerer elektrischer Maschinen wird auf vorteilhafte Weise durch die erfindungsgemäße Lösung deren Ein- bzw. Ausbau erleichtert.

Zudem oder alternativ kann die vorgesehene Einbauposition der elektrischen Maschine im Kraftfahrzeug im hinteren Bereich des Kraftahrzeugs, vorzugsweise im Bereich des Kofferraums, sein. Zudem oder alternativ kann die elektrische Maschine auch in normaler Vorwärts-Fahrtrichtung vor dem Achsgehäuse und der Verbrennungsmotor hinter dem Achsgehäuse angeordnet sein. Da gerade in der heckseitigen Einbaulage der elektrischen Maschine der Zugang von Hilfsmitteln meist stark eingeschränkt ist, wird durch die erfindungsgemäße Lösung auf vorteilhafte Weise wiederum der Ein- bzw. Ausbau der elektrischen Maschine erleichtert.

Zudem oder alternativ kann das Kraftfahrzeug ein Omnibus, vorzugsweise Hybrid-Omnibus, sein. Das Kraftfahrzeug kann allerdings auch ein anderes Nutzfahrzeug, beispielsweise ein Lastkraftwagen sein.

Ferner wird erfindungsgemäß auch eine Hilfsvorrichtung zum Ein- und/oder Ausbau einer elektrischen Maschine in/aus einem Kraftfahrzeug bereitgestellt. Vorzugsweise handelt es sich bei dem Kraftfahrzeug um ein Hybrid-Kraftfahrzeug oder ein rein elektrisch angetrieben Kraftfahrzeug. Die Hilfsvorrichtung umfasst dabei einen ersten Befestigungsbereich, der auch als erster Befestigungsarm und/oder erster Befestigungsträger bezeichnet werden kann, der mittels mindestens einer ersten Befestigungsstelle lösbar an einer Tragstruktur des Kraftfahrzeugs befestigbar ist. Ferner umfasst die Hilfsvorrichtung einen zweiten Befestigungsbereich, der auch als zweiter Befestigungsarm und/oder zweiter Befestigungsträger bezeichnet werden kann, und der mittels mindestens einer zweiten Befestigungsstelle lösbar an der elektrischen Maschine und/oder lösbar an einem mit der elektrischen Maschine verbundenen Motorträger befestigbar ist. Zur lösbaren Befestigung können hierbei unter anderem - im Stand der Technik bekannte - Befestigungsmittel, wie Schrauben, Nieten, Bolzen etc., verwendet werden. Weiterhin umfasst die Hilfsvorrichtung eine Schwenkeinrichtung, vorzugsweise eine Scharnier- und/oder Gelenkeinrichtung, die den ersten Befestigungsbereich um eine Schwenkachse schwenkbar mit dem zweiten Befestigungsbereich verbindet. Beispielsweise kann die Schwenkeinrichtung hierzu als Drehgelenk ausgebildet sein. Die Hilfsvorrichtung kann dabei ferner auch alle Merkmale, wie sie in diesem Dokument bereits im Zuge des Verfahrens beschrieben wurden, und umgekehrt, aufweisen. D. h., die verfahrensgemäß offenbarten Merkmale des Verfahrens sollen somit auch im Zusammenhang mit der Vorrichtung und die vorrichtungsgemäß offenbarten Merkmale der Vorrichtung sollen somit auch im Zusammenhang mit dem Verfahren offenbart und beanspruchbar sein. Auf vorteilhafte Weise wird durch die eben beschriebene Hilfsvorrichtung eine einfache und kostengünstige Möglichkeit zum Ein- bzw. Ausbau einer elektrischen Maschine in ein bzw. aus dem Kraftfahrzeug bereitgestellt, mit der die Montage, die Wartung und mögliche Reparaturen an der elektrischen Maschine vereinfacht werden.

Um auf vorteilhafte Weise eine kostengünstige Schwenkeinrichtung mit möglichst wenigen zusätzlichen Bauteilen bereitzustellen, kann gemäß einem weiteren Aspekt der Erfindung die Schwenkeinrichtung als Scharnier sowie der erste und zweite Befestigungsbereich jeweils als über einen Scharnierbolzen in Verbindung stehende Scharnierflügel ausgebildet sein. Hierbei kann der Scharnierbolzen, der in diesem Zusammenhang auch als Scharnierstift bezeichnet werden kann, auch als integraler Bestandteil des ersten oder zweiten Befestigungsbereichs ausgebildet sein. Ferner kann der erste und/oder zweite Befestigungsbereich zur schwenkbaren Lagerung am Scharnierbolzen auch eine Buchse und/oder Öse umfassen.

Nach einer Weiterbildung dieses Aspekts kann der erste Befestigungsbereich dabei verdrehfest mit dem Scharnierbolzen verbunden sein. Beispielsweise kann der erste Befestigungsbereich mit dem Scharnierbolzen verschweißt sein. Die damit einhergehende eingeschränkte Bewegungsfreiheit der Hilfsvorrichtung erleichtert dabei auf vorteilhafte Weise deren Montage.

Zudem oder alternativ kann der zweite Befestigungsbereich zumindest abschnittsweise entlang des Scharnierbolzens bewegbar gelagert sein und mittels einer Hebeeinrichtung der Hilfsvorrichtung bewegbar sein. Die Hebeeinrichtung kann hierzu eine Spindelmutter sowie ein mit der Spindelmutter in Eingriff stehendes Außengewinde des Scharnierbolzens umfassen, weshalb die Hebeeinrichtung in dieser Ausführungsform auch als Spindeltrieb bezeichnet werden kann. Wird die Spindelmutter gegenüber dem Scharnierbolzen verdreht, so entsteht eine translatorische Bewegung der Spindelmutter entlang der Schwenkachse, durch die der zweite Befestigungsbereich bewegt werden kann. Auf vorteilhafte Weise wird durch diesen Aspekt ein einfach zu realisierende Hebemechanismus mit wenigen Bauteilen bereitgestellt. Zudem oder alternativ kann der zweite Befestigungsbereich auch zweiteilig ausgebildet ist, wobei die beiden Teile beabstandet voneinander und durch den erste Befestigungsbereich getrennt auf dem Scharnierbolzen angeordnet sind. Mit anderen Worten kann die Schwenkeinrichtung als dreiteiliges Scharnier ausgebildet sein, wobei der erste Befestigungsbereich als Zwischenstück zwischen den beiden Teilen des zweiten Befestigungsbereichs auf dem Scharnierbolzen angeordnet ist. Auf vorteilhafte Weise kann dadurch die Stabilität der Hilfsvorrichtung erhöht.

Gemäß einen weiteren Aspekt der Erfindung kann der erste Befestigungsbereich der Hilfsvorrichtung zwei Befestigungsstellen aufweisen. Beispielsweise kann der erste Befestigungsbereich zwei Durchgangsbohrungen umfassen. Dadurch wird auf vorteilhafte Weise eine möglichst verdrehsichere Befestigung des ersten Befestigungsbereichs ermöglicht. Zudem oder alternativ kann die mindestens eine erste und/oder zweite Befestigungsstelle auch als Langloch ausgebildet sein. Dies wiederum erleichtert auf vorteilhafte Weise die Montage der Hilfsvorrichtung, da dadurch ein Toleranzausgleich gewährleistet wird.

Weiterhin wird erfindungsgemäß ein Kraftfahrzeug, vorzugsweise ein Hybrid-Kraftfahrzeug, mit einer Hilfsvorrichtung wie in diesem Dokument beschrieben bereitgestellt. Vorzugsweise handelt es sich bei dem Kraftfahrzeug dabei um ein Nutzfahrzeug, beispielsweise einen Lastkraftwagen. Die elektrische Maschine kann hierbei auch auf einer gegenüberliegenden Seite des Achsgehäuses wie der Verbrennungsmotor angeordnet sein.

Nach einem weiteren Aspekt der Erfindung kann das Kraftfahrzeug auch ein Hybrid-Omnibus mit einer Hilfsvorrichtung wie in diesem Dokument beschrieben sein. Vorzugsweise ist dabei die elektrische Maschine im eingebauten Zustand im Bereich des Kofferraums des Hybrid-Omnibusses angeordnet. Zudem oder alternativ kann die elektrische Maschine auch in normaler Vorwärts-Fahrtrichtung vor dem Achsgehäuse und der Verbrennungsmotor hinter dem Achsgehäuse angeordnet sein. Da gerade in der heckseitigen Einbaulage der elektrischen Maschine der Zugang von Hilfsmitteln meist stark eingeschränkt ist, wird durch die erfindungsgemäße Lösung auf vorteilhafte Weise Ein bzw. Ausbau der elektrischen Maschine erleichtert.

Die zuvor beschrieben Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1: ein Flussdiagramm eines Verfahrens zum Ein- und/oder Ausbau einer elektrischen Maschine in den / aus dem Antriebsstrang eines Kraftfahrzeugs gemäß einer Ausführungsform der Erfindung;
- Figur 2: eine schematische 3D-Darstellung einer Hilfsvorrichtung zum Ein- und/oder Ausbau einer elektrischen Maschine in/aus einem Kraftfahrzeug im montierten Zustand gemäß einer Ausführungsform der Erfindung;
- Figur 3: eine schematische Darstellung des Verschwenkvorgang der elektrischen Maschine mittels der in Figur 2 dargestellten Hilfsvorrichtung in Aufsicht;
- Figur 4: eine schematische Darstellung des Zusammenwirkens des Motorträgers mit am Kraftfahrzeug angeordneten Positioniermitteln;
- Figur 5: ein schematische 3D-Darstellung des Absenk- bzw. Anhebevorgangs des Motorträgers mittels der Hilfsvorrichtung gemäß einer Ausführungsform der Erfindung in Vogelperspektive;
- Figur 6: eine schematische 3D-Darstellung von Positioniermitteln zur Lagefixierung gemäß einer Ausführungsform der Erfindung; und
- Figur 7: eine schematische Darstellung eines Kraftfahrzeugs gemäß einer Ausführungsform der Erfindung.

Gleiche oder funktional äquivalente Elemente sind dabei in allen Figuren mit denselben Bezugszeichen beschrieben und zum Teil nicht gesondert beschrieben.

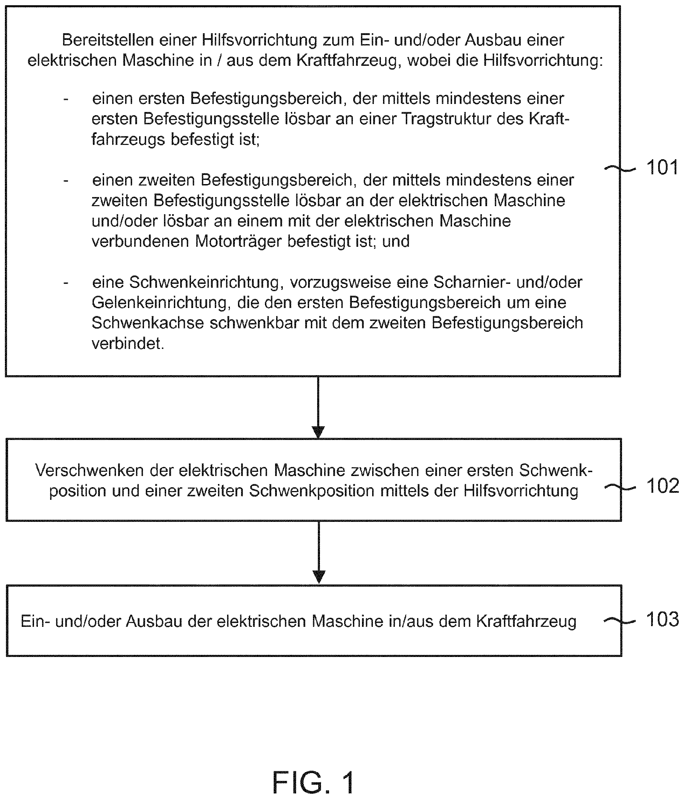

Figur 1 zeigt ein Flussdiagramm eines Verfahrens zum Ein- und/oder Ausbau einer elektrischen Maschine 1 in den / aus dem Antriebsstrang eines Kraftfahrzeugs 20 gemäß einer Ausführungsform der Erfindung. Im Schritt 101 erfolgt das Bereitstellen einer Hilfsvorrichtung 10 zum Ein- und/oder Ausbau einer elektrischen Maschine 1 in/aus dem Kraftfahrzeug 20. Die Hilfsvorrichtung 10 umfasst dabei einen ersten Befestigungsbereich 2a, der mittels mindestens einer ersten Befestigungsstelle 2a₁ lösbar an einer Tragstruktur 3 des Kraftfahrzeugs 20 befestigt ist. Ferner umfasst die Hilfsvorrichtung 10 einen zweiten Befestigungsbereich 2b, der mittels mindestens einer zweiten Befestigungsstelle 2b₁ lösbar an der elektrischen Maschine 1 und/oder lösbar an einem mit der elektrischen Maschine 1 verbundenen Motorträger 1a befestigt ist. Vorzugsweise ist der Motorträger 1a dabei in Form einer Motorträgerplatte ausgebildet, wobei der Motorträger 1a bzw. die Motorträgerplatte sowohl Befestigungsstellen zum lösbaren Befestigen der elektrischen Maschine 1 am Motorträger 1a als auch Befestigungsstellen zum lösbaren Befestigen des Motorträgers 1a am Kraftfahrzeug 20 umfassen kann. Weiterhin umfasst die Hilfsvorrichtung 10 eine Schwenkeinrichtung 4, vorzugsweise eine Scharnier- und/oder Gelenkeinrichtung, die den ersten Befestigungsbereich 2a um eine Schwenkachse S schwenkbar mit dem zweiten Befestigungsbereich 2b verbindet.

Im Schritt 102 erfolgt ein Verschwenken der elektrischen Maschine 1 zwischen einer ersten Schwenkposition S₁ und einer zweiten Schwenkposition S₂ mittels der Hilfsvorrichtung 10. Vorzugsweise handelt es sich bei der ersten Schwenkposition S₁ um eine Position nahe der vorgesehenen Einbauposition der elektrischen Maschine 1 im Kraftfahrzeug 20 und/oder bei der zweiten Schwenkposition S₂ um eine fahrzeugaußenliegende Position, die einen möglichst guten Zugang weiterer Hilfsmittel (z. B. Kran, Gabelstapler etc.) ermöglicht.

Im Schritt 103 erfolgt dann ein Ein- und/oder Ausbau der elektrischen Maschine 1 in/aus dem Kraftfahrzeug 20. Dieser Schritt kann in diesem Zusammenhang auch als Montage bzw. Demontage der elektrischen Maschine 1 in/aus dem Kraftfahrzeug 20 bezeichnet werden. Mit anderen Worten kann die elektrische Maschine 1 somit in ihrer vorgesehenen Einbauposition fixiert und/oder aus dem Kraftfahrzeug 20 entfernt bzw. entnommen werden. Auf vorteilhafte Weise wird durch das eben beschriebene Verfahren einfache und kostengünstige Möglichkeit zum Ein- bzw. Ausbau einer elektrischen Maschine 1 in ein bzw. aus einem Kraftfahrzeug 20 bereitgestellt, mit dem die Montage, die Wartung und mögliche Reparaturen an der elektrischen Maschine 1 vereinfacht werden.

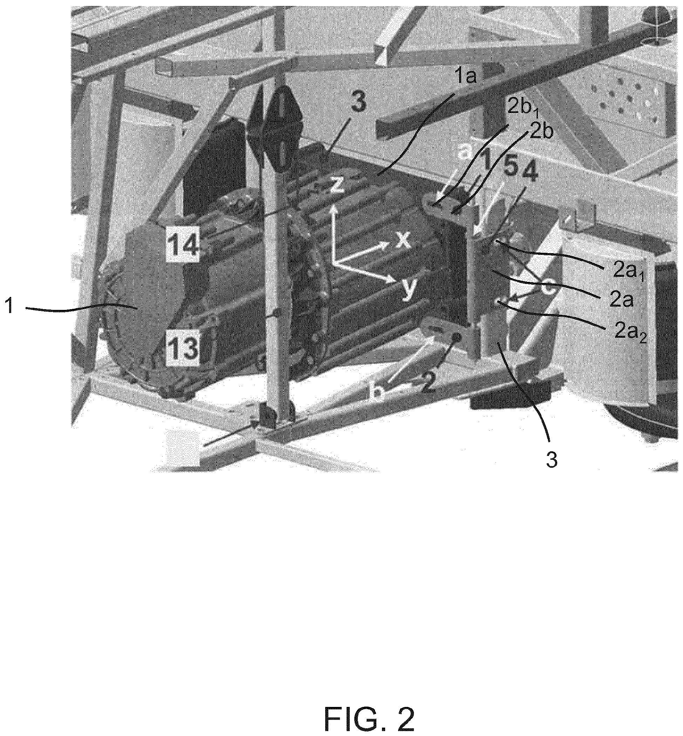

Figur 2 zeigt eine schematische 3D-Darstellung einer Hilfsvorrichtung 10 zum Ein- und/oder Ausbau einer elektrischen Maschine 1 in/aus einem Kraftfahrzeug 20 im montierten Zustand im Kraftfahrzeug 20 gemäß einer Ausführungsform der Erfindung. Bevor hierbei im Detail auf die konstruktiven Merkmale der erfindungsgemäßen Hilfsvorrichtung 10 eingegangen wird, sollen zunächst kurz die wesentlichen Merkmale des Kraftfahrzeugs 20 - hier beispielhaft ein Omnibus - beschrieben werden. Das Kraftfahrzeug 20 umfasst dabei eine aus mehreren Quer-und Längsverstrebungen gebildete selbstragende Tragstruktur 3, die Lasten aufnehmen kann und an der die wesentlichen (nicht gezeigten) Fahrzeugkomponenten (Motor, Getriebe etc.) befestigt werden können. Ferner umfasst das Kraftfahrzeug 20 eine elektrische Maschine 1, um das Kraftfahrzeug elektrisch anzutreiben, die über einen Motorträger 1a in Form einer Motorträgerplatte an der Tragstruktur 3 verschraubt ist. Die Motorträgerplatte umfasst hierzu mehrere Verschraubungsstellen zum lösbaren Befestigen der Motorträgerplatte an der Tragstruktur sowie mehrere Verschraubungsstellen zum lösbaren Befestigen der elektrischen Maschine 1 an der Motorträgerplatte.

Erfindungsgemäß ist weiterhin eine Hilfsvorrichtung 10 im Kraftfahrzeug 20 montiert. Die Hilfsvorrichtung 10 umfasst dabei einen ersten Befestigungsbereich 2a, der mittels zwei erster Befestigungsstellen 2a₁, 2a₂ lösbar an einer Tragstruktur 3 des Kraftfahrzeugs 20 befestigt ist. Vorliegend ist der erste Befestigungsbereich 2a dabei plattenförmig sowie die beiden ersten Befestigungsstellen 2a₁, 2a₂ jeweils in Form von Langlochschraubverbindung ausgebildet. Der erste Befestigungsbereich 2a ist weiterhin in einem Randbereich hakenförmig zu einer Scharnieröse abgebogen, in der ein Scharnierstift fest verschweißt ist und beidseitig vom ersten Befestigungsbereich 2a absteht. Ferner umfasst die Hilfsvorrichtung 10 einen zweiten Befestigungsbereich 2b, der vorliegend zweiteilig ausgebildet ist. Die beiden Teile weisen dabei jeweils einen ösenförmigen Endbereich auf, mittels dem sie drehbar auf dem Scharnierstift gelagert sind, während sie an ihrem andern Ende über je eine zweite Befestigungsstelle 2b₁, 2b₂ lösbar über Langlochschraubverbindungen an der mit der elektrischen Maschine 1 verbundenen Motorträgerplatte befestigt sind. Die erwähnten ösenförmigen Endbereiche des zweiten Befestigungsbereichs 2b und der mit dem ersten Befestigungsbereich 2a fest verbundene Scharnierbolzen bilden hierbei eine Schwenkeinrichtung 4, die ein Verschenken des zweiten Befestigungsbereichs 2b um eine Schwenkachse S ermöglicht. Anders ausgedrückt kann die vorliegende Hilfsvorrichtung 10 auch als dreiteiliges Scharnier verstanden werden, bei dem der erste Befestigungsbereich 2a als Zwischenstück zwischen den beiden Teilen des zweiten Befestigungsbereichs 2b auf dem Scharnierbolzen angeordnet ist. Mittels dieser Hilfsvorrichtung 10 wird - nach Lösen der Verschraubungen zwischen der Motorträgerplatte und der Tragstruktur 3 - ein Verschwenken der elektrischen Maschine 1 um die Schwenkachse S ermöglicht. Dadurch kann die elektrische Maschine 1 aus ihrer fahrzeugmittigen Einbauposition in eine fahrzeugaußenliegende Wartungsposition verschenkt werden, in der die Zugänglichkeit von außen erhöht ist. Um hierbei ein Verschwenken der elektrischen Maschine 1 mit möglichst geringen Kraftaufwand zu ermöglichen ist die Schwenkachse S vorzugsweise im Wesentlichen vertikal orientiert.

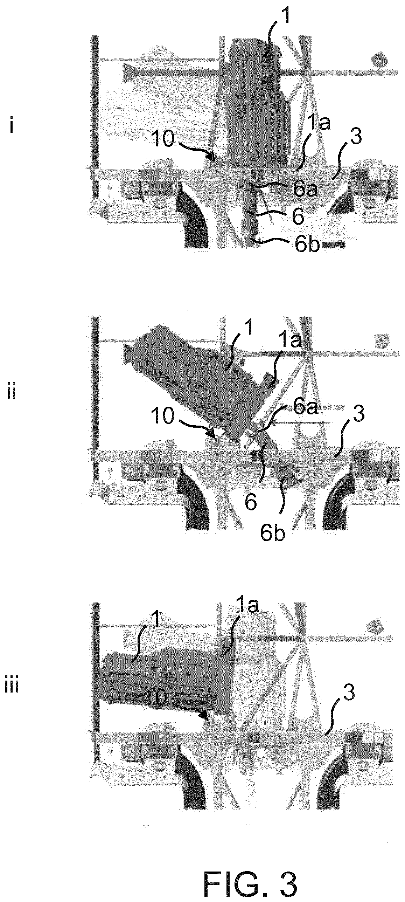

Figur 3 zeigt exemplarisch einen eben beschriebenen Verschwenkvorgang mittels der Hilfsvorrichtung 10 ist in Aufsicht. In der Darstellung i befindet sich die elektrische Maschine 1 noch in ihrer vorgesehenen Einbauposition im Kraftfahrzeug 20, wobei die Hilfsvorrichtung 10 bereits an der Tragstruktur 3 und am Motorträger 1a montiert wurde. In der Aufsicht ist ferner erkennbar, dass die elektrische Maschine 1 mittels einer Gelenkwelle 6 mit dem nicht näher dargestellten Antriebsstrang verbunden ist. Die Gelenkwelle 6 kann dabei ein erstes, der elektrischen Maschine 1 zugeordnetes, Ende 6a und ein zweites, dem Antriebsstrang zugeordnetes, Ende 6b umfassen. Ferner ist ebenfalls erkennbar, das gerade die Befestigungsstelle des ersten Endes 6a der Gelenkwelle 6 an der elektrischen Maschine 1 bauartbedingt durch die Tragstruktur 3 nur eine schlechte Zugänglichkeit für Werkzeuge ermöglicht. Für den Ausbau der elektrischen Maschine 1 wird zunächst das - beispielsweise von einer Werkstattgrube aus - gut zugängliche zweite Ende 6b der Gelenkwelle 6 vom Antriebstrang getrennt und eventuell vorhandene Verschraubungen und/oder sonstigen Fixierungen des Motorträgers 1a gelöst. Wie in Darstellung ii gezeigt wird dann die Baugruppe aus elektrischer Maschine 1, Motorträger 1a und einseitig mit der elektrischen Maschine 1 verbundene Gelenkwelle 6 dann aus der ersten Schwenkposition S₁ (Darstellung i) verschwenkt, wobei die in Darstellung ii gezeigte Position als Zwischenschwenkposition S_{z} bezeichnet werden soll. Aufgrund der besseren Erreichbarkeit des ersten Endes 6a der Gelenkwelle in der Zwischenschwenkposition S_{z} kann dort dann die Demontage der Gelenkwelle 6 - die bauartbedingt bislang ein Weiterverschwenken verhindert - von der elektrischen Maschine 1 erfolgen. Ohne die an der elektrischen Maschine 1 montierte Gelenkwelle 6 kann die elektrische Maschine 1, wie in Darstellung iii gezeigt, mittels der Hilfsvorrichtung 10 weiter in eine zweite Schwenkposition S₂ verschwenkt werden, welche annähernd einen Winkel von 90° zur ursprünglichen Einbauposition einnimmt. In dieser zweiten fahrzeugäußeren Schwenkposition S₂ kann die elektrische Maschine 1 dann mittels entsprechender Hilfsmittel z. B. einem Kran und/oder eine Hubvorrichtung aus dem Kraftfahrzeug 20 entfernt werden, wobei hierzu die Befestigungen des Motorträgers 1a an der Hilfsvorrichtung 10 und/oder die Befestigungen der elektrischen Maschine 1 am Motorträger 1a gelöst werden können.

Nachdem bislang in erster Line der Verschwenkvorgang beschrieben wurde soll im Folgenden auf einen weiteren Bewegungsfreiheitsgrad der Erfindung genauer eingegangen werden. Mit der in Figur 1 dargestellten Ausführungsform der Erfindung ist nämlich - neben dem reinen Verschenken der elektrischen Maschine 1 - auch ein Bewegen der elektrischen Maschine 1 entlang der Schwenkachse S möglich. Hierzu umfasst die Hilfsvorrichtung 10 weiterhin eine Hebeeinrichtung 5. Diese ist vorliegend in Form einer Spindelmutter, deren Innengewinde mit einem zumindest abschnittsweise am Scharnierbolzen angebrachtes Außengewinde des Scharnierbolzens in Eingriff steht. Wird die Spindelmutter gegenüber dem Scharnierbolzen verdreht, so entsteht hieraus eine translatorische Bewegung der Spindelmutter entlang der Schwenkachse S. Um diese auch an die elektrische Maschine 1 zu übertragen sind die beiden Teile des zweiten Befestigungsbereichs 2b dabei entlang des Scharnierbolzens bewegbar gelagert. Hierdurch der obere Teil des zweiten Befestigungsbereichs 2b durch die Bewegung der Spindelmutter angehoben werden, wobei sich diese Bewegung durch die Kopplung über die Motorträgerplatte auch an den unteren Teil des zweiten Befestigungsbereichs 2b überträgt. Durch den zusätzlichen Freiheitsgrad durch das Anheben und Absenken der elektrischen Maschine 1 kann auf vorteilhafte Weise eine Zentrierung bzw. Lagefixierung der elektrischen Maschine 1 geschaffen werden, die im Folgenden genauer beschrieben wird.

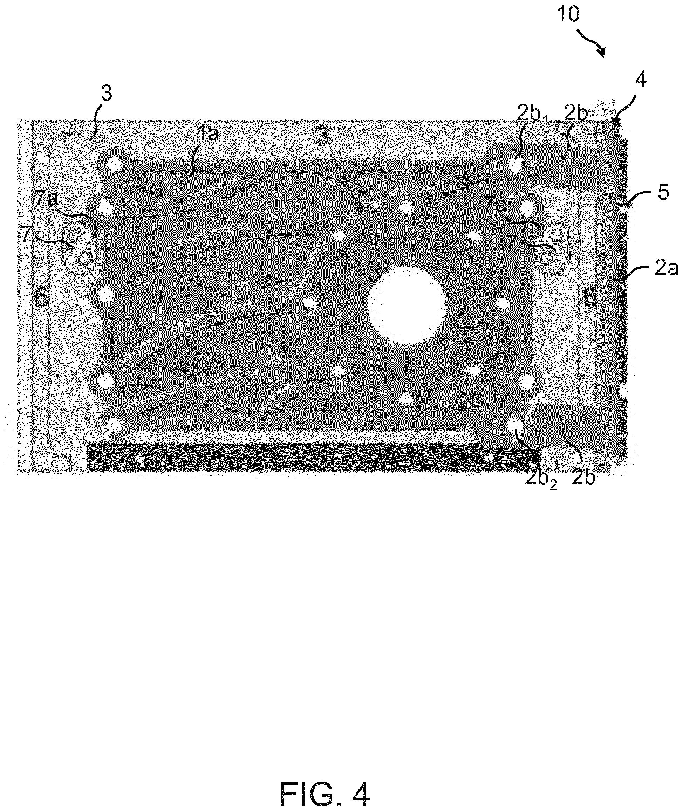

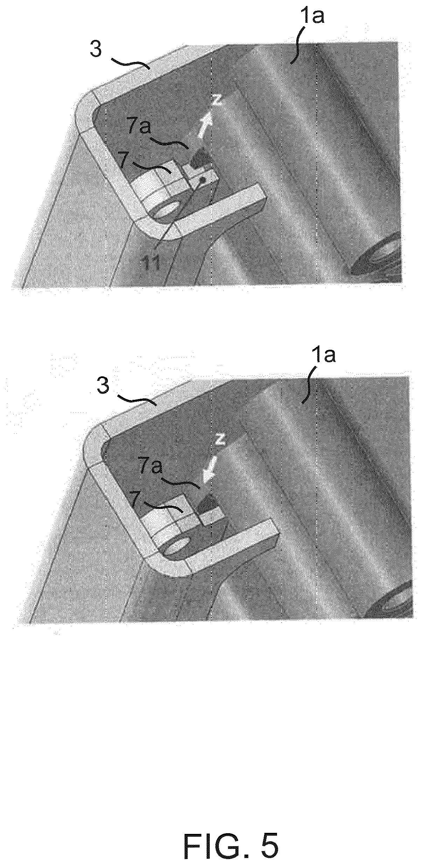

Figur 4 zeigt hierzu eine schematische Darstellung des Zusammenwirkens des Motorträgers 1a mit am Kraftfahrzeug 20 angeordneten Positioniermitteln 7. Die dabei an der Tragstruktur 3 des Kraftfahrzeugs 20 befestigten Positioniermittel 7 sind vorliegend als Zentriertaschen ausgebildet, die hier in einer Seitenansicht sowie in Figur 5 in einer 3D-Darstellung gezeigt sind. Diese Zentriertaschen in Form taschenförmige Vertiefungen dienen zur Aufnahme am Motorträger 1a angebrachter zumindest teilweise formentsprechend ausgebildeter zapfen- bzw. nasenförmiger Elemente 7a, die in die Zentriertaschen eingreifen können. Um die Genauigkeit der Positionierung zu erhöhen können dabei mehrere Positioniermittel vorgesehen sein. Vorliegend sind die Zentriertaschen weiterhin zumindest nach oben hin offen, so dass ein Lösen oder Herstellen einer formschlüssigen Verbindung zwischen Zentriertaschen und den zapfen- bzw. nasenförmiger Elemente 7a des Motorträgers 1a durch ein Anheben oder Absenken des Motorträgers 1a erfolgt. Dieser Vorgang ist nochmals in Figur 5 in einer schematischen 3D-Darstellung verdeutlicht. Vorzugsweise erfolgt das Anheben bzw. Absenken des Motorträgers 1a mittels der zuvor beschrieben Hebeeinrichtung 5 der Hilfsvorrichtung 10. Dadurch kann dann die elektrischen Maschine 1 und/oder der Motorträger 1a mittels der Hebeeinrichtung 5 zwischen der ersten Schwenkposition S₁ und einer lagefixierten Montageposition bewegt werden, wobei als Montageposition die vorgesehenen, allerdings noch nicht, z. B. durch Verschraubungen, fixierte Einbauposition der elektrischen Maschine verstanden werden soll. Vorzugsweise wird durch die Lagefixierung bzw. Positionierung der elektrischen Maschine 1 bzw. des Motorträgers 1a durch die Positioniermittel 7 die Lage dieser Bauteile in der Montageposition so zentriert, dass zur Erleichterung der Montage/Demontage die entsprechenden Befestigungsstellen möglichst zueinander ausgerichtet sind.

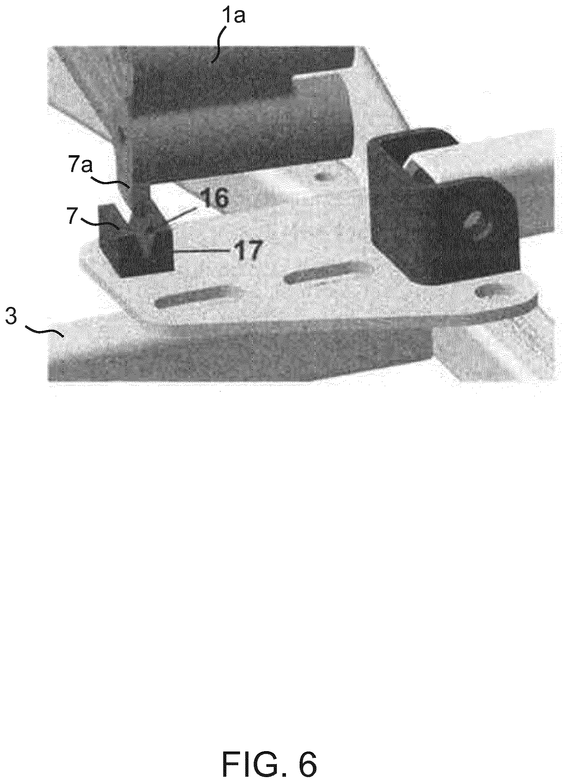

Neben einer Lagefixierung aus der ersten Schwenkposition S₁ zur besseren Montage der elektrischen Maschine 1 an der Tragstruktur 3, kann auch aus der zweiten fahrzeugäußeren Schwenkposition S₂ eine Lagefixierung des Motorträgers 1a und/oder der elektrischen Maschine 1 erfolgen, um beispielsweise Reparaturen an der elektrischen Maschine 1 vornehmen zu können. So können wie in Figur 6 gezeigt weitere Positioniermittel, vorliegend in Form einer V-förmigen Nut, in einem äußeren Bereich des Kraftfahrzeugs 20 angeordnet sein, in die wiederum formentsprechende Zapfen bzw. Nasen des Motorträgers 1a eingreifen können. Vorzugsweise kann diese formschlüssige Verbindung dabei wiederum durch ein Absenken des Motorträgers 1a - vorliegend nun aus der zweiten Schwenkposition S₂ - erfolgen. Mit anderen Worten kann durch ein Absenken des Motorträgers 1a ein Überführen des Motorträgers 1a von der zweiten Schwenkposition S₂ in eine lagefixierte Wartungsposition erfolgen, wobei als Wartungsposition eine möglichst fahrzeugaußenliegende und damit für Reparaturen gut zugängliche Position der elektrischen Maschine 1 verstanden werden kann. Zudem oder alternativ können auch im Bereich zwischen erster und zweiter Schwenkposition, vorzugsweise in der in Figur 3 dargestellten Zwischenschwenkposition S_{z}, Positioniermittel zur Lagefixierung des Motorträgers 1a und/oder der elektrischen Maschine 1 vorgesehen sein.

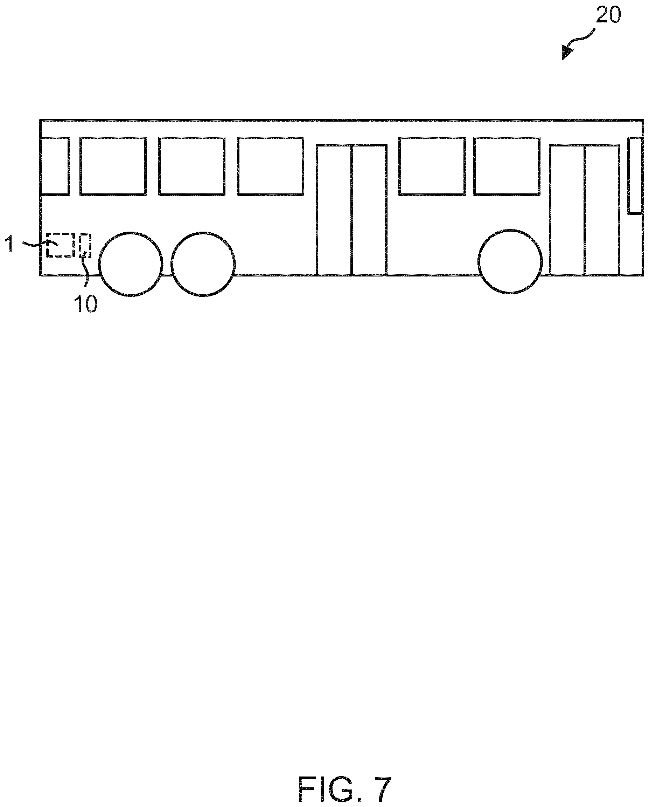

Weiterhin zeigt Figur 7 eine schematische Darstellung eines Kraftfahrzeugs 20 gemäß einer Ausführungsform der Erfindung. Vorliegend handelt es sich um einen Hybrid-Omnibus, in dessen Heckbereich eine elektrische Maschine 1 verbaut ist. Um diese möglichst einfach und kostengünstig in bzw. aus dem Kraftfahrzeug 20 ein- bzw. auszubauen, umfasst der Hybrid-Omnibus ferner eine Hilfsvorrichtung 10 wie in diesem Dokument beschrieben. Die exakte Anordnung bzw. Positionierung der elektrischen Maschine 1 und der Hilfsvorrichtung ist dabei lediglich beispielhaft dargestellt. Ebenso können die elektrische Maschine 1 und die Hilfsvorrichtung auch zwischen der Vorderachse und den beiden Hinterachsen bzw. vor der Vorderachse angeordnet sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Elektrische Maschine
- 1a: Motorträgerplatte
- 2a: Erster Befestigungsbereich
- 2a₁, 2a₂: Erste Befestigungsstellen
- 2b: Zweiter Befestigungsbereich
- 2b₁: Zweite Befestigungsstelle
- 3: Tragstruktur des Kraftfahrzeugs
- 4: Schwenkeinrichtung
- 5: Hebeeinrichtung
- 6: Gelenkwelle
- 6a: Erstes Ende der Gelenkwelle
- 6b: Zweites Ende der Gelenkwelle
- 7: Positioniermittel
- 7a: Nasenförmiges Element
- 10: Hilfsvorrichtung
- 20: Kraftfahrzeug
- S: Schwenkachse
- S₁: Erste Schwenkposition
- S₂: Zweite Schwenkposition
- S_{z}: Zwischenschwenkposition

## Patentansprüche

1. Verfahren zum Ein- und/oder Ausbau einer elektrischen Maschine (1) in/aus einem Kraftfahrzeug (20), vorzugsweise in/aus einem Hybrid-Kraftfahrzeug, umfassend die Schritte:
a) Bereitstellen einer Hilfsvorrichtung (10) zum Ein- und/oder Ausbau einer elektrischen Maschine (1) in/aus dem Kraftfahrzeug (20), umfassend:
- einen ersten Befestigungsbereich (2a), der mittels mindestens einer ersten Befestigungsstelle (2a₁) lösbar an einer Tragstruktur (3) des Kraftfahrzeugs (20) befestigt ist;
- einen zweiten Befestigungsbereich (2b), der mittels mindestens einer zweiten Befestigungsstelle (2b₁) lösbar an der elektrischen Maschine (1) und/oder lösbar an einem mit der elektrischen Maschine (1) verbundenen Motorträger (1a) befestigt ist; und
- eine Schwenkeinrichtung (4), vorzugsweise eine Scharnier- und/oder Gelenkeinrichtung, die den ersten Befestigungsbereich (2a) um eine Schwenkachse (S) schwenkbar mit dem zweiten Befestigungsbereich (2b) verbindet;
b) Verschwenken der elektrischen Maschine (1) zwischen einer ersten Schwenkposition (S₁) und einer zweiten Schwenkposition (S₂) mittels der Hilfsvorrichtung (10); und
c) Ein- und/oder Ausbau der elektrischen Maschine (1) in/aus dem Kraftfahrzeug (20).

2. Verfahren nach Anspruch 1, **dadurch gekennzeichnet, dass** die Hilfsvorrichtung (10) dauerhaft im Kraftfahrzeug (20) verbaut ist oder nur zum Ein- und/oder Ausbau der elektrischen Maschine (1) am Kraftfahrzeug (20) montiert wird.

3. Verfahren nach einem der vorherigen Ansprüche, **dadurch gekennzeichnet, dass** die Hilfsvorrichtung (10) eine Hebeeinrichtung (5) umfasst,
a) mittels der der zweite Befestigungsbereich (2b) relativ zum ersten Befestigungsbereich (2a) entlang der Schwenkachse (S) bewegbar, vorzugsweise anhebbar und/oder absenkbar, ist; und/oder
b) mittels der eine formschlüssige Verbindung der elektrischen Maschine (1) und/oder des Motorträgers (1a) mit dem Kraftfahrzeug (20) lösbar ist.

4. Verfahren nach einem der vorherigen Ansprüche, **dadurch gekennzeichnet, dass** die Schwenkeinrichtung (4) als Scharnier sowie der erste und zweite Befestigungsbereich (2a, 2b) jeweils als über einen Scharnierbolzen in Verbindung stehende Scharnierflügel ausgebildet sind.

5. Verfahren nach einem der vorherigen Ansprüche, **dadurch gekennzeichnet, dass** das Kraftfahrzeug (20) Positioniermittel (7), vorzugsweise Zentriertaschen, zur formschlüssigen Lagefixierung der elektrischen Maschine (1) und/oder des Motorträgers (1a) in einer vorbestimmten Montage- und/oder Wartungsposition umfasst.

6. Verfahren nach Anspruch 5, **gekennzeichnet durch**
- Lösen und/oder Herstellen einer Lagefixierung der elektrischen Maschine (1) und/oder des Motorträgers (1a) mittels der Hebeeinrichtung (5); und/oder
- Überführen der elektrischen Maschine (1) und/oder des Motorträgers (1a) mittels der Hebeeinrichtung (5) zwischen der ersten Schwenkposition (S₁) und der Montageposition und/oder zwischen der zweiten Schwenkposition (S₂) und der Wartungsposition.

7. Verfahren nach einem der vorherigen Ansprüche, **dadurch gekennzeichnet, dass** die elektrische Maschine (1) über eine Gelenkwelle (6) antriebsmäßig mit dem Antriebsstrang des Kraftfahrzeugs (20) verbunden ist, und der Schritt des Verschwenkens der elektrischen Maschine (1) zwischen der ersten Schwenkposition (S₁) und der zweiten Schwenkposition (S₂) mittels der Hilfsvorrichtung (10) beim Ausbau die folgenden Schritte umfasst:
- Lösen der Gelenkwelle (6) vom Antriebsstrang;
- Verschwenken der elektrischen Maschine (1) und Gelenkwelle (6) in eine Zwischenschwenkposition (S_{z}) zwischen der ersten und zweiten Schwenkposition (S₁, S₂);
- Lösen der Gelenkwelle (6) von der elektrischen Maschine (1); und
- Verschwenken der elektrischen Maschine (1) in die zweite Schwenkposition (S₂).

8. Verfahren nach Anspruch 7, **dadurch gekennzeichnet, dass** während des Schritts des Verschwenkens der elektrischen Maschine (1) und der Gelenkwelle (6) von der ersten Schwenkposition (S₁) in die Zwischenschwenkposition (S_{z}) die Gelenkwelle (6) an der Hilfsvorrichtung (10) lösbar fixiert ist.

9. Verfahren nach einem der vorherigen Ansprüche, **gekennzeichnet durch** mindestens eines der folgenden Merkmale:
a) dass die Tragstruktur (3) des Kraftfahrzeugs (20) ein Rahmen, ein Querträger und/oder ein Spant ist;
b) dass das Kraftfahrzeug (20) Arretierungsmittel zur lösbaren kraft-, form- und/oder reibschlüssigen Arretierung der elektrischen Maschine (1) und/oder des Motorträgers (1a) umfasst;
c) dass die erste Schwenkposition (S₁) und die zweite Schwenkposition (S₂) einen Winkel von mindestens 45° und/oder nahezu 90° einschließen; und
d) dass die Schwenkachse (S) im montierten Zustand der Hilfsvorrichtung (10) im Wesentlichen vertikal ausgerichtet ist.

10. Verfahren nach einem der vorherigen Ansprüche, **dadurch gekennzeichnet,**
a) **dass** die elektrischen Maschine (1) eine elektrische Maschine (1) zum Antrieb des Kraftfahrzeugs (20) ist; und/oder
b) **dass** die vorgesehene Einbauposition der elektrischen Maschine (1) im Kraftfahrzeug (20) im hinteren Bereich des Kraftahrzeugs (20), vorzugsweise im Bereich des Kofferraums, ist; und/oder
c) **dass** das Kraftfahrzeug (20) ein Omnibus, vorzugsweise Hybrid-Omnibus, ist.

11. Hilfsvorrichtung (10) zum Ein- und/oder Ausbau einer elektrischen Maschine (1) in/aus einem Kraftfahrzeug (20), vorzugsweise in/aus einem Hybrid-Kraftfahrzeug, umfassend:
- einen ersten Befestigungsbereich (2a), der mittels mindestens einer ersten Befestigungsstelle (2a₁) lösbar an einer Tragstruktur (3) des Kraftfahrzeugs (20) befestigbar ist;
- einen zweiten Befestigungsbereich (2b), der mittels mindestens einer zweiten Befestigungsstelle (2b₁) lösbar an der elektrischen Maschine (1) und/oder lösbar an einem mit der elektrischen Maschine (1) verbundenen Motorträger (1a) befestigbar ist; und
- eine Schwenkeinrichtung (4), vorzugsweise eine Scharnier- und/oder Gelenkeinrichtung, die den ersten Befestigungsbereich (2a) um eine Schwenkachse (S) schwenkbar mit dem zweiten Befestigungsbereich (2b) verbindet.

12. Hilfsvorrichtung (10) nach Anspruch 11, **dadurch gekennzeichnet, dass** die Schwenkeinrichtung (4) als Scharnier sowie der erste und zweite Befestigungsbereich (2a, 2b) jeweils als über einen Scharnierbolzen in Verbindung stehende Scharnierflügel ausgebildet sind.

13. Hilfsvorrichtung (10) nach Anspruch 12, **dadurch gekennzeichnet,**
a) **dass** der erste Befestigungsbereich (2a) verdrehfest mit dem Scharnierbolzen verbunden ist; und/oder
b) **dass** der zweite Befestigungsbereich (2b) zumindest abschnittsweise entlang des Scharnierbolzens bewegbar gelagert ist und mittels einer Hebeeinrichtung (5) der Hilfsvorrichtung (10), umfassend eine Spindelmutter und ein mit dieser in Eingriff stehendes Außengewinde des Scharnierbolzens, bewegbar ist; und/oder
c) **dass** der zweite Befestigungsbereich (2b) zweiteilig ausgebildet ist, wobei die beiden Teile beabstandet voneinander und durch den erste Befestigungsbereich (2a) getrennt auf dem Scharnierbolzen angeordnet sind.

14. Hilfsvorrichtung (10) nach einem der Ansprüche 11 bis 13, **gekennzeichnet durch** mindestens eines der folgenden Merkmale:
a) dass der erste Befestigungsbereich (2a) zwei Befestigungsstellen (2a₁, 2a₂) aufweist; und/oder
b) dass die mindestens eine erste und/oder zweite Befestigungsstelle (2a₁, 2b₁) als Langloch ausgebildet ist.

15. Kraftfahrzeug (20), vorzugsweise Hybrid-Kraftfahrzeug, mit einer Hilfsvorrichtung (10) nach einem der Ansprüche 11 bis 14.

16. Kraftfahrzeug (20) nach Anspruch 15, **dadurch gekennzeichnet, dass** das Kraftfahrzeug ein Hybrid-Omnibus ist und die elektrische Maschine (1) im eingebauten Zustand im Bereich des Kofferraums angeordnet ist.
